Europäisches Patentamt

European Patent Office

Office européen des brevets

(19)

(11) Veröffentlichungsnummer : **0 007 550
B1**

(12) **EUROPÄISCHE PATENTSCHRIFT**

(45) Veröffentlichungstag der Patentschrift :
**11.11.81**

(51) Int. Cl.³ : **G 01 R 33/02, H 02 P 7/44**

(21) Anmeldenummer : **79102476.3**

(22) Anmeldetag : **16.07.79**

(54) **Wechselspannungsintegrator zur Bildung eines einer Flusskomponente in einer Drehfeldmaschine proportionalen Spannungssignals, Verwendung zweier derartiger Wechselspannungsintegratoren bei einem Drehfeldmaschinenantrieb und Verfahren zum Betrieb eines derartigen Drehfeldmaschinenantriebs.**

(30) Priorität : **31.07.78 DE 2833542**

(43) Veröffentlichungstag der Anmeldung :
**06.02.80 (Patentblatt 80/03)**

(45) Bekanntmachung des Hinweises auf die Patenterteilung : **11.11.81 Patentblatt 81/45**

(84) Benannte Vertragsstaaten :
**AT BE CH DE FR GB IT LU NL SE**

(56) Entgegenhaltungen :
**DE - A1 - 2 340 506
DE - B - 2 144 422
DE - B2 - 2 635 965
DE - C - 1 806 769
CH - A - 490 190**

**SIEMENS-ZEITSCHRIFT 51, Heft 5, 1977
TH. SALZMANN « Direktumrichter und Regelkonzept für getriebelosen Antrieb von Rohrmühlen »
Seiten 416 bis 422**

(73) Patentinhaber : **SIEMENS AKTIENGESELLSCHAFT
Berlin und München
Postfach 22 02 61
D-8000 München 22 (DE)**

(72) Erfinder : **Dreiseitl, Walter, Dipl.-Ing.
Alterlanger Strasse 23a
D-8520 Erlangen (DE)**
Erfinder : **Köllensperger, Dieter, Dipl.-Ing.
Kulmbacher Strasse 4
D-8520 Erlangen (DE)**
Erfinder : **Salzmann, Theodor, Dipl.-Ing.
Leimbergerstrasse 29
D-8520 Erlangen (DE)**
Erfinder : **Schlegel, Thomas
Dr. Georg-Dassler-Strasse 36
D-8551 Hemhofen (DE)**
Erfinder : **Welgel, Wolf-Dieter, Dr. Dipl.-Ing.
Nr. 126
D-8524 Kleinsendelbach (DE)**

Wechselspannungsintegrator zur Bildung eines einer Flußkomponente in einer Drehfeldmaschine proportionalen Spannungssignals, Verwendung zweier derartiger Wechselspannungsintegratoren bei einem Drehfeldmaschinenantrieb und Verfahren zum Betrieb eines derartigen Drehfeldmaschinenantriebes

Die Erfindung betrifft einen Wechselspannungsintegrator gemäß dem Oberbegriff des Anspruches 1 zur Bildung eines einer Flußkomponente in einer Drehfeldmaschine proportionalen Spannungssignals. Die Erfindung betrifft ferner die Verwendung zweier baugleicher derartiger Wechselspannungsintegratoren bei einem Drehfeldmaschinenantrieb und ein Verfahren zum Betrieb eines derartigen Drehfeldmaschinenantriebes.

Der Wechselspannungsintegrator kann angewendet werden bei einem Drehfeldmaschinenantrieb, der aus einer umrichtergespeisten Drehfeldmaschine, insbesondere Synchronmaschine, und einer Stromrichtersteuerung für den eigengetakteten, insbesondere feldorientierten Betrieb dieser Maschine, besteht. Dabei werden zwei baugleiche Wechselspannungsintegratoren eingesetzt zur Bildung von zwei elektrischen Spannungssignalen, die jeweils einer unterschiedlichen Flußkomponente in der Drehfeldmaschine proportional sind, wobei jeder Wechselspannungsintegrator einen Integrator und einen gegengekoppelten Nullpunktsregler zur Unterdrückung des Gleichanteils der Integratorausgangsspannung umfaßt, dessen Eingang mit dem Ausgang des Integrators verbunden und dessen Ausgang an den Summenpunkt am Eingang des Integrators angeschlossen ist, und wobei jedem Integrator als Eingangsspannungen jeweils eine zu einer Flußkomponente zugehörigen Sternspannung proportionale Spannung sowie zur Kompensation des ohmschen Ständerspannungsabfalls eine dem zugehörigen Phasenstrom in einer Maschinenzuleitung proportionale Spannung zugeführt sind, und wobei ferner eine weitere vom Phasenstrom abhängige Spannung zur Kompensation des induktiven Streuspannungsabfalls verarbeitet wird. Eine deratiger Schaltungsanordnung für einen Drehfeldmaschinenantrieb ist aus der DE-AS 26 35 965 bekannt.

Bei einem bekannten Drehfeldmaschinenantrieb wird die Information über Lage und Größe des Flußvektors in der Drehfeldmaschine direkt aus den Klemmengrößen Spannung und Strom gebildet. Bei einer dreiphasigen Drehfeldmaschine genügt es dabei, Sternspannung und Phasenstrom jeweils nur zweimal zu messen und in zwei nachgeschalteten baugleichen Wechselspannungsintegratoren zu verarbeiten. Bei dem bekannten Drehfeldmaschinenantrieb wird zunächst die Hauptfeldspannung der Drehfeldmaschine ermittelt, indem in einem Summenpunkt am Eingang jedes Wechselspannungsintegrators von einer Sternspannung eine dem ohmschen Ständerspannungsabfall der Drehfeldmaschine proportionale Spannung sowie eine der zeitlichen Ableitung des Ständerstroms proportionale Spannung zur Berücksichtigung der induktiven Streuspannung abgezogen werden.

Anschließend werden in den beiden Wechselspannungsintegratoren durch Integration der Hauptfeldspannung zwei der drei Flußkomponenten in der Drehfeldmaschine ermittelt. Diese zwei Flußkomponenten bestimmen die Lage des Flußvektors und seinen Betrag.

Eine Information über Lage und Größe des Flußvektors ermöglicht es, die Synchronmaschine feldorientiert (vgl. Siemens-Zeitschrift 1971, Seiten 765 bis 768 und DE-PS 23 53 594) zu betreiben.

Beim Anfahren der Synchronmaschine ist es von besonderer Bedeutung, die Flußkomponenten zur Lageortung des Läufers möglichst genau zu erfassen. Eine Fehlmessung kann hierbei im ungünstigsten Fall dazu führen, daß die Synchronmaschine nicht anfahren kann.

Bei dem aus der DE-AS 26 35 965 bekannten Drehfeldmaschinenantrieb ist bei dem aus einem Integrator und einem gegengekoppelten PI-Nullpunktsregler bestehenden Wechselspannungsintegrator der Nullpunktsregler abschaltbar ausgeführt. Der Nullpunktsregler dient dazu, das Wegdriften der Ausgangsspannung des Integrators infolge von Gleichanteilen der am Summenpunkt anstehenden Eingangsspannungen zu vermeiden.

Bei dem bekannten Drehfeldmaschinenantrieb erfolgt zum Anfahren einer Synchronmaschine bei Stillstand des Laüfers dessen Lageortung derart, daß zunächst die Erregung eingeschaltet wird, wobei die umrichterseitige Speisung der Ständerwicklungen zunächst unterbleibt. Aus den in den Ständerwicklungen induzierten Spannungskomponenten können die Flußkomponenten hierbei dann sehr präzise gewonnen werden, wenn der Nullpunktsregler abgeschaltet ist; denn der Nullpunktsregler würde — wenn er eingeschaltet wäre — bei der Lageortung bestrebt sein, die vom Integrator ermittelten, aufintegrierten Anfangswerte der induzierten Spannungen gegen Null zu regeln und dadurch die Lageermittlung des Läufers verfälschen. Nach Zuschalten des Ständerstromes und Anlauf der Synchronmaschine wird nunmehr der Nullpunktsregler eingeschaltet, wobei die im normalen Arbeitsbetrieb entstehenden Gleichanteile jeder Flußkomponente ausgeregelt werden. Bei der plötzlichen Zuschaltung des Nullpunktsreglers auf die laufende Maschine treten jedoch Übergangsvorgänge nach Art einer abklingenden Schwingung im Regelkreis und auch im Drehmoment auf. Damit kann das zur Verfügung stehende Drehmoment der Synchronmaschine zeiweilig verkleinert sein.

Darüberhinaus treten bei der Nullpunktsregelung des bekannten Drehfeldmaschinenantriebes von der Frequenz der Maschine abhängige Winkel- und Amplitudenfehler auf, von denen insbesondere die Winkelfehler bedeutsam sind. Aufgrund der relativ großen Winkelfehler steht bei dem durchgeführten Regelkonzept der dem Flußvektor fest zugeordnete Durchflutungsvektor nicht im gewünschten Winkel zum Flußvektor, so daß nur eine verkleinerte Komponente drehmomentbildend wirkt. Das führt dazu, daß zur Erreichung des geforderten Drehmoments Stromrichter und Drehfeldmaschine für höhere Ströme auszulegen sind, damit auch bei auftretenden größeren Winkelfehlern eine ausreichend große drehmomentbildende, senkrecht zum Flußvektor angeordnete Komponente des Durchflutungsvektors zur Verfügung steht. Bei bereits vorhandenen Drehfeldmaschinenantrieben tritt aufgrund der Winkelfehler eine Einschränkung der Belastbarkeit der Maschine auf.

Darüberhinaus können bei dem eingangs erwähnten Drehfeldmaschinenantrieb bei Schwebungen zwischen der Netz- und Maschinenfrequenz Stabilitätsprobleme auftreten, die den zulässigen Frequenzbereich einschränken. Ist beispielsweise der Nullpunktsregler so dimensioniert, daß bei einer Betriebsfrequenz von 100 Hz Schwegungsfrequenzen von 1 Hz ausreichend bedämpft werden, dann wird bei dem vorbekannten Drehfeldmaschinenantrieb eine Betriebsfrequenz von 1 Hz unmöglich, da diese Frequenz vom Nullpunktsregler als Störfrequenz interpretiert und unzulässig bedämpft wird.

Der Erfindung liegt die Aufgabe zugrunde, einen Wechselspannungsintegrator entsprechend dem Oberbegriff des Anspruchs 1 anzugeben, der bei derartigen Drehfeldmaschinenantrieben eine optimale Umrichter- und Maschinenausnutzung in einem vergrößerten Drehzahlstellbereich gewährleistet und bei dem die mit der Zuschaltung des Nullpunktsreglers verbundenen Probleme vermieden werden.

Die Aufgabe wird erfindungsgemäß dadurch gelöst, daß der Nullpunktsregler einen P-Regler und einen I-Regler aufweist, daß das Ausgangssignal des P-Reglers und das Ausgangssignal des I-reglers einem Summenpunkt am Integratoreingang zugeführt ist und daß das Ausgangssignal des Integrators proportional zur Frequenz des umlaufenden Flußvektors, also proportional der Drehzahl der Drehfeldmaschine, gewichtet dem Eingang des P-Reglers und proportional zum Quadrat der Frequenz gewichtet dem Eingang des I-Reglers zugeführt ist, wobei der Gewichtungsfaktor einen Maximalwert von 1 aufweist.

Im Gegensatz zum vorbekannten Wechselspannungsintegrator handelt es sich bei dem erfindungsgemäßen um einen frequenzadaptiven Wechselspannungsintegrator zur Bestimmung des umlaufenden Flußvektors. Beim Einsatz derartiger Wechselspannungsintegratoren für Drehfeldmaschinenantriebe wird der Durchgriff der Nullpunktsregelung abhängig von der Betriebsfrequenz der Drehfeldmaschine kontinuierlich so verstellt, daß die Amplituden- und Winkelfehler im gesamten Drehzahlbereich konstant bleiben. Der Wechselspannungsintegrator mit solch einer Nullpunktsregelung weist eine in Abhängigkeit von der Frequenz des umlaufenden Flußvektors verstellbare Frequenz bei konstanter Durchtrittsfrequenz und konstanter Dämpfung auf. Die gegenüber der Betriebsfrequenz der Drehfeldmaschine niederfrequenten Schwebungsfrequenzen zwischen Umrichter und Maschine sind durch die Adaption der Nullpunktsregelung ausreichend bedämpft. Wegen der Kleinheit und der Konstanz der Winkelfehler können Maschine und Umrichter im gesamten Frequenzbereich voll ausgenutzt werden, da die Rechenfehler bei der Ermittlung des Flusses frequenzunabhängig sind. Auch kann bei einer Synchronmaschine sowohl bei stillstehender als auch bei laufender Synchronmaschine der Läuferortungsvorgang durch Zuschalten der Erregung — wie eingangs beschrieben — durchgeführt werden, wobei der Nullpunktsregler bereits vom Anfahren des Drehfeldantriebs an kontinuierlich im Eingriff bleibt. Die beim Stand der Technik mit der plötzlichen Zuschaltung der Nullpunktsregelung auftretenden Ausgleichsvorgänge treten somit nicht mehr auf.

Es ist vorteilhalft, wenn dem P-Regler jedes Wechselspannungsintegrators ein erstes Multiplizierglied vorgeschaltet ist und wenn das Ausgangssignal des ersten Multipliziergliedes einem zweiten Multiplizierglied zugeführt ist, das dem Eingang des I-Reglers vorgeschaltet ist. Die Multiplikationsfaktoren der beiden Multiplizierglieder sind hierbei gleich und proportional zur frequenz des umlaufenden Flußvektors, bzw. der Drehzahl der Drehfeldmaschine. Hierbei wird in einfacher Weise erreicht, daß das über den P-Regler an den Eingang des Integrators zurückgeführte Signal am Eingang des P-Reglers abgeschwächt, aber proportional zur Frequenz des Flußvektors der Drehfeldmaschine ansteigend zur Verfügung steht. Das über den I-Regler an den Eingang des Integrators zurückgeführte Ausgangssignal wird durch die beiden in Bezug auf den Eingang des I-Reglers in Reihe geschalteten Multiplizierglieder quadratisch zur Frequenz des umlaufenden Flußvektors der Drehfeldmaschine gewichtet. Der Gewichtungsfaktor für das Eingangssignal des P-Reglers entspricht hierbei dem Multiplikationsfaktor des ersten Multipliziergliedes, der Gewichtungsfaktor für das Eingangssignal des I-Reglers dem Produkt der beiden übereinstimmenden Multiplikationsfaktoren der Multiplizierglieder.

Es ist vorteilhaft, wenn als Multiplizierglieder Pulsbreitenmultiplizierglieder eingesetzt sind und wenn dem zweiten Pulsbreitenmultiplizierglied ein Glättungsglied vorgeschaltet ist. Der Tastgrad der als Multiplizierglieder eingesetzten Pulsbreitenmultiplizierglieder stimmt hierbei überein und ist jeweils proportional zur Frequenz der Drehfeldmaschine. Er schwankt zwischen den Werten 0 und 1. Die Spannung hinter einem Pulsbreitenmultiplizierglied ist jeweils das Produkt aus Tastgrad und Eingangspannung des Pulsbreitenmultipliziergliedes. Um eine quatratische Beeinflussung der Eingangsspannung des I-Reglers zu erreichen, ist es erforderlich, daß zwischen die beiden bezüglich des Eingangs der I-Reglers in Serie liegenden Pulsbreitenmultiplizierglieder ein Glättungsglied eingefügt ist.

Es ist vorteilhaft, wenn als Glättungsglied ein Kondensator dient, der dem Rückführungswiderstand eines dem ersten Pulsbreitenmultiplizierglied nachgeschalteten Umkehrverstärkers parallel geschaltet ist, wobei das Ausgangssignal des Umkehrverstärkers am Eingang des P-Reglers und des zweiten Pulsbreitenmultipliziergliedes ansteht. Hierdurch läßt sich mit einfachen Mitteln eine hinreichende Glättung erreichen.

Um das Zeitverhalten des Nullpunktsreglers möglichst wenig zu beeinträchtigen, ist es vorteilhaft, wenn die Kapazität des Kondensators sehr klein in Verhältnis zu dem die Zeitkonstante des I-Reglers bestimmenden Kondensator ist. Die untere Grenze der Kapazität des Kondensators ist durch die nötige Glättung gegeben.

In einer bevorzugten Ausführungsform sind als Pulsbreitenmultiplizierglieder FET-Schalter eingesetzt, an deren Steuereingang das Ausgangssignal eines Taktgenerators ansteht, dessen Tastgrad proportional zur Frequenz des umlaufenden Flußvektors, bzw. der Drehzahl der Drehfeldmaschine ist. Dies stellt eine funktionssichere, kostengünstige Realisierung des Pulsbreitenmultipliziergliedes dar.

Es ist günstig, wenn der Taktgenerator unterhalb einer Übergangsfrequenz des umlaufenden Flußvektors der Drehfeldmaschine pulsfrequenzverstellbar und oberhalb der Übergangsfrequenz pulsbreitenverstellbar ist. Hiermit wird ein sehr großer Stellbereich für das Tastverhältnis ermöglicht.

Um eine aufwandsarme Berücksichtigung der induktiven Ständerspannungsabfälle der Drehfeldmaschine zu gewährleisten, ist es vorteilhaft, wenn ein weiterer Summenpunkt am Ausgang jedes Integrators vorgesehen ist, dem ein dem Integral des induktiven Streuspannungsabfalls proportionales Signal zugeführt ist. Hierdurch wird die aus der eingangs genannten DE-AS 26 35 965 bekannte Differentiation des zugehörigen Phasenstromes nach der Zeit vermieden. Der weitere Summenpunkt liegt hierbei zwischen den Integratorausgang und dem Abzweig des Nullpunktsreglers.

Ein vorteilhaftes Verfahren zum Betrieb des erfindungsgemäßen Drehfeldmaschinenantriebes besteht darin, daß beim Anlauf einer Synchronmaschine folgende Schritte in zeitlicher Aufeinanderfolge vorgenommen werden:

a) Zuerst wird die Stromversorgung der Stromrichtersteuerung eingeschaltet,

b) anschließend wird der Gewichtungsfaktor kurzzeitig auf den Wert 1 gesetzt,

c) dann wird der Gewichtungsfaktor auf den der momentanen Frequenz der Synchronmaschine entsprechenden Wert gesetzt,

d) frühestens gleichzeitig wird die Synchronmaschine über die Erregerwicklung aufgeregt,

e) nach Erreichen des gewünschten Flußwertes wird die Ständerstromregelung freigegeben.

Hierdurch wird eine einwandfreie Inbetriebnahme des Drehfeldmaschinenantriebes sowohl aus dem Stillstand als auch bei einem unter dem Einfluß einer Last bereits laufenden Drehfeldmaschinenantriebes erreicht.

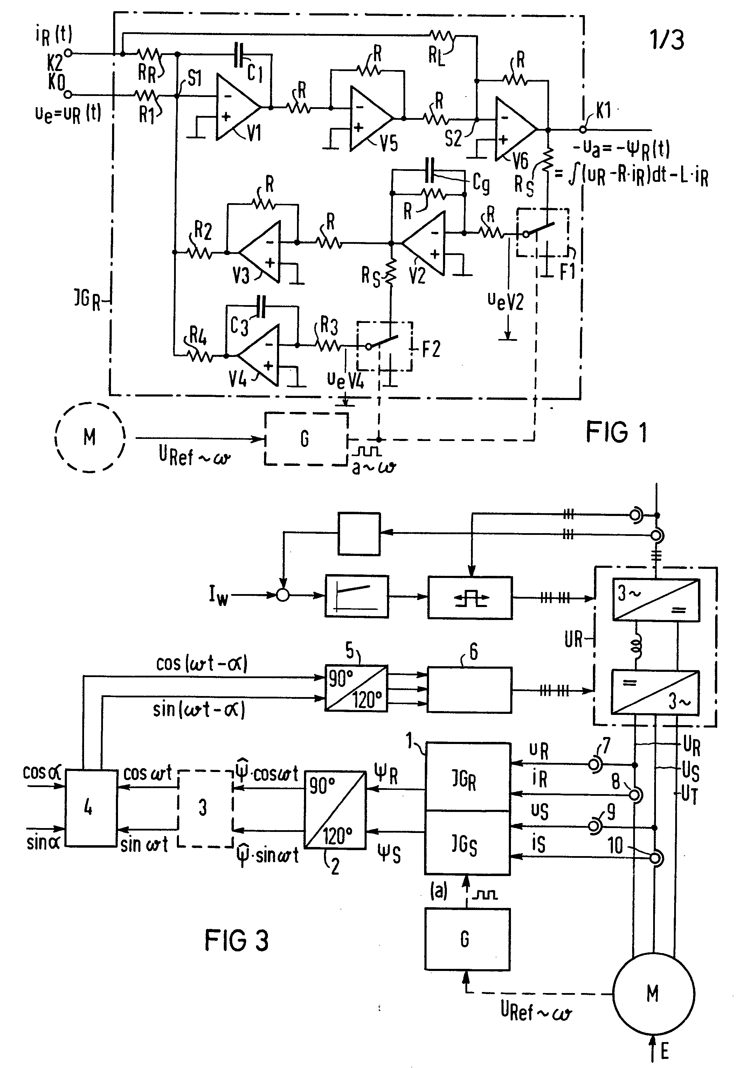

Die Erfindung wird im folgenden anhand von Ausführungsbeispielen in den Figuren 1 bis 5 näher erläutert.

Figur 1 zeigt ein Ausführungsbeispiel eines der beiden erfindungsgemäßen, bei einem Drehfeldmaschinenantrieb eingesetzten Wechselspannungsintegratoren $IG_R$ und $IG_S$ zur Bildung eines elektrischen Spannungssignales, das jeweils einer Flußkomponente in der Drehfeldmaschine proportional ist. Da die beiden benötigten Wechselspannungsintegratoren $IG_R$ und $IG_S$ baugleich sind, genügt es, den Aufbau und die Wirkungsweise des einen Wechselspannungsintegrators $IG_R$ zu erläutern.

An der Eingangsklemme KO liegt die Eingangsspannung $u_e$ an, die proportional zu einer Sternspannung der Drehfeldmaschine M ist. Die Eingangsspannung $u_e$ ist über einen Widerstand R1 an den Summenpunkt S1 des Integrators V1 gelegt. In im Figur 1 dargestellten Beispiel handelt es sich hierbei um die zur Sternspannung $U_R$ proportionale Spannung $U_R$. Zur Kompensation des ohmschen Ständerspannungsabfalls ist an die Klemme K2 des Wechselspannungsintegrators $IG_R$ ein dem Ständerstrom der Phase R der Drehfeldmaschine M proportionales, jedoch invertiertes Signal $-i_R$ angelegt und über den Widerstand $R_R$ mit dem Summenpunkt S1 verbunden. Der P-Regler V3, der I-Regler V4 sowie der Umkehrverstärker V2 bilden zusammen mit den Multipliziergliedern F1 und F2 in einem Gegenkopplungszweig den Nullpunktsregler.

Am Ausgang des Integrators V1 ist ein Umkehrverstärker V5 sowie ein Summierverstärker V6 zur Bildung des weiteren Summenpunktes S2 nachgeschaltet. Das Ausgangssignal des Summierverstärkers V6 stellt das Ausgangssignal des Wechselspannungsintegrators $IG_R$ dar, das an der Ausgangsklemme K1 abnehmbar ist. Das an der Eingangsklemme K2 des Wechselspannungsintegrators $IG_R$ anstehende, dem Stromfluß in der Phase R proportionale, invertierte Signal $-i_R$ ist über den Widerstand $R_L$ an den weiteren Summenpunkt S2 geführt. Hierdurch erfolgt am weiteren Summenpunkt S2 die Kompensation des der Phase R zugehörigen Integrals der induktiven Streuspannung der Synchronmaschine M. der Umkehrverstärker V5 dient lediglich dazu, die durch den Addierverstärker V6 hervorgerufene Umkehr der Ausgangsspannung des Integrators V1 rückgängig zu machen.

Der zwischen dem Summenpunkt S1 und der Ausgangsklemme K1 des Wechselspannungsintegrators $IG_R$ liegende Nullpunktsregler ist derart aufgebaut, daß das der Flußkomponente entsprechende Ausganssignal $u_a$ des Summierverstärkers V6 zunächst über einen Schutzwiderstand $R_S$, der für die weitere Betrachtung vernachlässigt wird, dem Pulsbreitenmultiplizierglied F1 zugeführt ist, dessen Ausgangssignal $U_{ev2}$ am Eingang des Umkehrverstärkers V2 ansteht. Im Pulsbreitenmultiplizierglied F1 wird

dessen Eingangsspannung $u_a$ mit dem Gewichtungsfaktor a multipliziert, der proportional mit der Frequenz ω der Synchronmaschine M zwischen den Werten 0 und 1 variierbar ist. Die Ausgangsspannung $U_{eV2}$ des Pulsbreitenmultipliergliedes F1 ergibt sich somit als Produkt des dem Tastgrad entsprechenden Gewichtungsfaktors a und der Eingangsspannung $u_a$ des Pulsbreitenmultipliergliedes F1. Die Bezeichnung a wird im folgenden gleichwertig sowohl für den Gewichtungsfaktor als auch für den Tastgrad verwendet.

Dem Rückführungswiederstand R des Umkehrverstärkers V2 ist ein Kondensator $C_g$ parallel geschaltet, der eine Glättung des wegen der Wirkung des Pulsbreitenmultipliziers F1 pulsförmigen Eingangssignals $U_{eV2}$ des Umkehrverstärkers V2 bewirkt.

Die so geglättete Ausgangsspannung $U_{aV2}$ des Umkehrverstärkers V2 ist parallel dem Eingang des P-Reglers V3 und über den Schutzwiderstand $R_S$ und das zweite Pulsbreitenmultiplierglied F2 dem Eingang des I-Reglers V4 zugeführt. Auch das zweite Pulsbreitenmultiplierglied F2 führt eine Multiplikation mit dem der Frequenz ω der Drehfeldmaschine M proportionalen Gewichtungsfaktor oder Tastgrad a durch, so daß das Eingangssignal $U_{eV4}$ des I-Reglers V4 das Produkt aus dem Quadrat des Gewichtungsfaktors oder Tastgrades a und der Eingangsspannung $u_a$ des Nullpunktsreglers darstellt. Damit ist das Eingangssignal des P-Reglers V3 mit dem drehzahlproportionalen Gewichtungsfaktor a, das Eingangssignal des I-Reglers V4 mit dem Quadrat des Gewichtungsfaktors a gewichtet. Die Ausgangssignale des P-Reglers V3 und des I-Reglers V4 Sind über die Widerstände R2 und R4 dem Summenpunkt S1 des Integrators V1 zugeführt.

Anstelle der Pulsbreitenmultiplierglieder F1 und F2 können prinzipiell auch hochwertige Analogmultiplierglieder mit niedrigem Nullpunktsfehler und geringer Drift eingesetzt werden. In diesem Fall ist es nicht erforderlich, das Eingangssignal des zweiten Multipliergliedes zu glätten, da dieses nicht impulsförmig auftritt. In dem in Figur 1 dargestellten Fall, in dem die beiden Pulsbreitenmultiplierglieder F1 und F2 synchron und mit gleichen Tastgrad a betrieben werden, ist eine Glättung unumgänglich.

Als Pulsbreitenmultiplierglieder F1 und F2 können FET-Schalter eingesetzt sein, an deren Steuereingang das Ausgangssignal eines Taktgenerators G ansteht, dessen Tastgrad dem Gewichtungsfaktor a entspricht und somit proportional zur Frequenz ω des umlaufenden Flußvektors der Drehfeldmaschine M zwischen den Werten 0 und 1 schwankt. Die FET-Schalter F1 und F2 werden somit synchron und mit gleichen Tastgrad a angesteuert.

Die Kapazität des Kondensators $C_g$ ist sehr klein im Verhältnis zu dem die Zeitkonstante des I-Reglers V4 bestimmenden Kondensators C3, um das Netzsignal möglichst unbeeinflußt zu lassen und lediglich die dem Tastgrad a entsprechende Schaltfrequenz zu bedämpfen. Die den Pulsbreitenmultiplierliedern F1 und F2 vorgeschalteten Schutzwiderstände $R_S$ dienen dem Schutz des vorgeschalteten Summierverstärkers V6, bzw. des vorgeschalteten Umkehrverstärkers V2 vor Rückwirkungen der durch die Pulsbreitenmultiplierglieder hervorgerufenen Schaltvorgänge. Der Widerstandswert des Widerstandes $R_S$ ist hierbei sehr klein gegen den Wert der Widerstände R1 und R3. Der Umkehrverstärker V2 dient lediglich der zur Erzielung einer Gegenkopplung notwendigen Vorzeichenumkehr des Nullpunktsreglers.

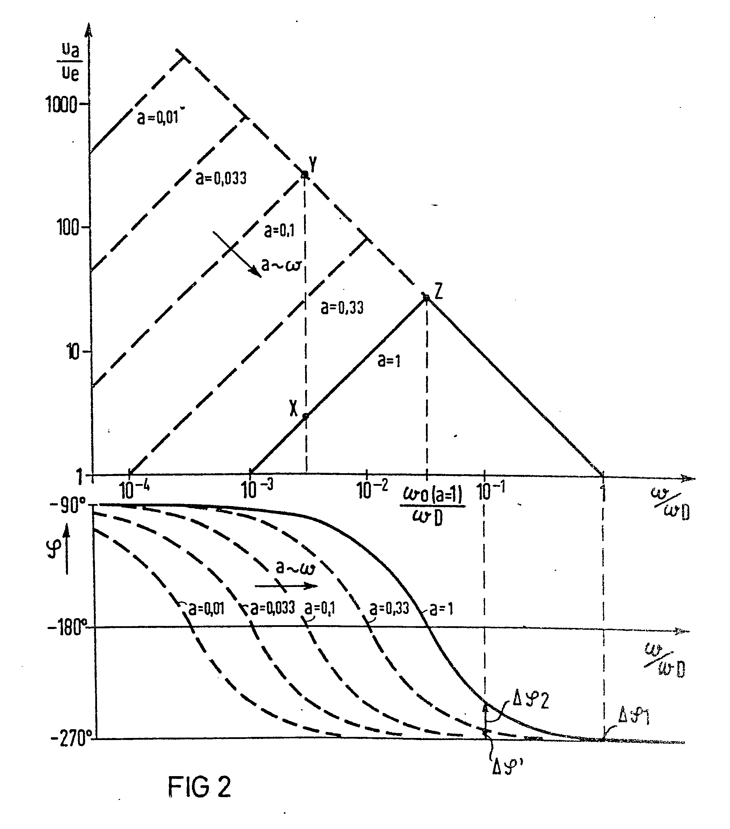

In Figur 2 ist der Frequenzgang für einen der beiden bei einem Drehfeldmaschinenantrieb eingesetzten Wechselspannungsintegratoren $IG_R$ und $IG_S$ dargestellt. Hierbei ist unterstellt, daß eine Optimierung nach dem Betragsoptimum vorgenommen wurden, was zu einer Dämpfung d = 0,7 führt. Der aufgezeichnete Frequenzgang stellt fünf einzelne Frequenzgänge für fünf unterschiedliche Werte des Gewichtungsfaktors oder Tastgrades a das, wobei jeder einzelne Frequenzgang dem eines $DT_2$-Gliedes entspricht. Hierbei ist zur Vereinfachung unterstellt, daß das an der Eingangsklemme K2 des Wechselspannungsintegrators anstehende Signal zur Kompensation des ohmschen Ständerspannungsabfalls und der induktiven Streuspannung gleich Null ist.

Im oberen Teil der Figur 2 ist das Amplitudenverhältnis der Ausgangsspannung $u_a$ zur Eingangsspannung $u_e$ des Wechselspannungsintegrators $IG_R$ oder $IG_S$ als Funktion der Frequenz ω der Synchronmaschine M in doppeltlogarithmischer Auftragung dargestellt. Als Parameter dient in dieser Darstellung der dem Gewichtungsfaktor entsprechende Tastgrad a. Er ist in Figur 2 stufenweise zwischen 0,01 und 1 variiert. Als Abszisseneinheit wird die normierte Frequenz $ω/ω_D$ verwendet, wobei $ω_D$ die Durchtrittsfrequenz des Wechselspannungsintegrators, d.h. den Schnittpunkt des Amplitudenganges mit der Abszisse darstellt.

Im unteren Teil der Figur 2 ist die Phasenverschiebung φ zwischen Ausgangsspannung $u_a$ und Eingangsspannung $u_e$ ebenfalls in Abhängigkeit von der normierten Frequenz $ω/ω_D$ der Drehfeldmaschine M dargestellt. Auch hier wurde der als Parameter dienende Tastgrad oder Gewichtungsfaktor a stufenweise zwischen den Werten 0,01 und 1 variiert.

Jeder der Wechselspannungsintegratoren $IG_R$ und $IG_S$ weist eine in Abhängigkeit von der Frequenz des umlaufenden Flußvektors verstellbare Eigenfrequenz $ω_0$ bei konstanter Durchtrittsfrequenz $ω_D$ und konstanter Dämpfung auf. Die Verstellung der Eigenfrequenz $ω_0$ erfolgt durch Variation des Gewichtungsfaktors oder Tastgrades a der beiden Pulsbreitenmultiplierglieder F1 und F2. Wird die Eigenfrequenz $ω_0$ proportional zur Frequenz ω und damit der Drehzahl n der Drehfeldmaschine M geführt, so ist der Phasenfehler Δφ der Wechselspannungsintegratoren drehzahlunabhängig. Der aus der eingangs genannten DE-AS 26 35 965 bekannte

Wechselspannungsintegrator weist demgegenüber eine starre, d.h. frequenzunabhängige Eigenfrequenz $\omega_0$ auf. Damit entspricht sein Frequenzgang einer der in Figur 2 dargestellten Kurven. Als Beispiel sei angenommen, der Frequenzgang des bekannten Wechselspannungsintegrators entspräche dem zum Tastgrad a = 1 gehörigen Frequenzgang in Figur 2, der ausgezogen dargestellt ist. Weiterhin sei angenommen, die Nennfrequenz des Drehfeldmaschinenantriebes entspräche $\omega_D$. Aus Figur 2 ist erkennbar, daß der Phasenfehler $\Delta\varphi_1$, d.h. die Abweichung der ausgezogenen Linie vom asymptotischen Wert $-270°$ mit ca 3° sehr klein ist. Wird nun der mit herkömmlichen Wechselspannungsintegratoren ausgestattete Drehfeldmaschinenantrieb mit um den Faktor 10 verringerter Frequenz $\omega$ betrieben, tritt als Phasenfehler der Wert $\Delta\varphi_2$ auf, der in der Größenordnung von 30° liegt. Um einen derartig hohen Phasenfehler auszuschließen, war man bislang gezwungen, den Wechselspannungsintegrator so zu dimensionieren, daß er beispielsweise einen Frequenzgang aufwies, wie er in Figur 2 dem Tastgrad a = 0,1 zugeordnet ist. Dies führte zu einer Verringerung des Phasenfehlers auf den Wert $\Delta\varphi'_2$. Damit mußte allerdings eine schlechtere Bedämpfung bei Schwebungsvorgängen zwischen der Frequenz der Drehfeldmaschine M und der Netzfrequenz in Kauf genommen werden. Bei einer Schwebungsfrequenz, von 0,003 $\omega_D$ ergab sich für das Amplitudenverhältnis — wie aus dem oberen Teil der Figur 2 ersichtlich — der vergleichsweise hohe Werte Y, wobei unterstellt ist, daß die Betriebsfrequenz der Synchronmaschine $\omega = \omega_D$ sei.

Bei den bei einem Drehfeldmaschinenantrieb eingesetzten, erfindungsgemäßen Wechselspannungsintegratoren $IG_R$ und $IG_S$ wird die Eigenfrequenz $\omega_0$ kontinuierlich mit der aktuellen Drehzahl oder Frequenz der Synchronmaschine M variiert, d.h. daß bei einer Frequenz der Synchronmaschine $\omega = \omega_D$ der zum Tastgrad 2 = 1 gehörige Frequenzgang des Wechselspannungsintegrators vorliegt, bei einer Frequenz der Drehfeldmaschine M von $\omega = 0,1 \omega_D$ der zu a = 0,1 gehörige Verlauf des Frequenzgangs. Wie aus Figur 2 leicht ersichtlich ist, treten damit nur noch sehr kleine und konstante Phasenfehler $\Delta\varphi$ auf, damit abnehmender Frequenz des Drehfeldmaschinenantriebes die den Phasenverlauf des Wechselspannungsintegrators wiedergebenden Kurven kontinuierlich und proportional zur Frequenz $\omega$ nach links verschoben werden, so daß der zwischen dem unteren Teil jeder Kurve und den durch $-270°$ verlaufenden Asymtote liegender Phasenfehler klein und konstant bleibt. Für den oben beispielhaft angeführten Betriebsfall $\omega = \omega_D$ ist für das Amplitudenverhältnis die ausgezogen dargestellte Kurze anzuwenden. Für eine Schwebungsfrequenz von 0,003 $\omega_D$ tritt in diesem Fall eine erheblich bessere Bedämpfung auf, da für das Amplitudenverhältnis nunmehr anstelle des Wertes Y der Wert X vorliegt.

Bei dem Betriebsfall $\omega = \omega_D$ und damit a = 1 liegt der ungünstigste Fall einer Schwebung bei einer Schwebungsfrequenz von 0,03 $\omega_D$, bei dem das Amplitudenverhältnis $u_a/u_e$ den Maximalwert Z erreicht. Bei diesem Betriebsfall $\omega = \omega_D$ tritt jedoch bei einem unter Verwendung des aus der DE-AS 26 35 965 bekannten Wechselspannungsintegrators mit starrer Eigenfrequenz ausgeführten Drehfeldmaschinenantrieb eine kritische Schwebungsfrequenz bei 0,003 $\omega_D$ auf, wobei sich für das Amplitudenverhältnis $u_a/u_e$ der gegenüber Z erheblich größere Wert Y ergibt; denn, um den Phasenfehler $\Delta\varphi$ in Grenzen zu halten, müßte dieser Wechselspannungsintegrator mit starrer Eigenfrequenz so dimensioniert sein, daß sein Amplitudenverlauf etwa dem in Figur 2 mit a = 0,1 dargestellte entspricht.

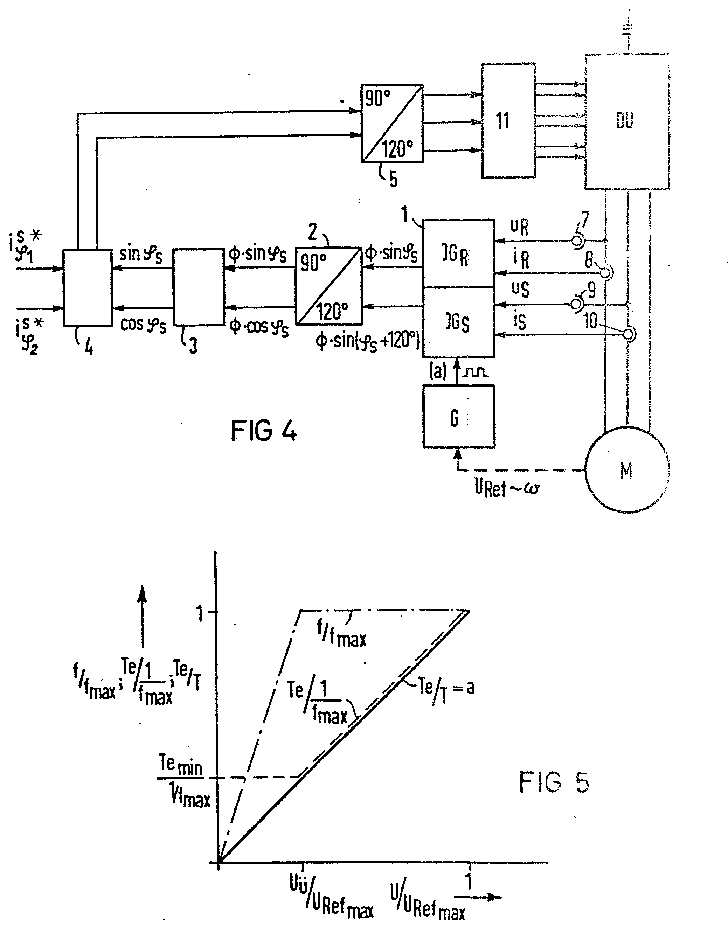

In Figur 3 ist als Ausführungsbeispiel eines Drehfeldmaschinenantriebes ein Stromrichtermotor mit der zugehörigen Steuerung dargestellt. Hierbei wird die Synchronmaschine M von einem Umrichter UR mit den Phasenströmen $i_R$, $i_S$ und $i_T$ gespeist. Der Leistungsteil eines derartigen Stromrichtermotors ist beispielsweise aus der DE-OS 26 20 992 bekannt. Der Block 1 des in Figur 3 dargestellten Blockschaltbildes umfaßt zwei der erläuterten baugleichen Wechselspannungsintegratoren, wobei der Wechselspannungsintegrator $IG_R$ der Phase R, der Wechselspannungsintegrator $IG_S$ der Phase S zugeordnet ist. Die Sternspannungen $U_R$ und $U_S$ werden über die Spannungswandler 7 und 9, erfaßt und den hier nicht eingezeichneten Eingangsklemmen KO (siehe Figur 1) der Wechselspannungsintegratoren $IG_R$ und $IG_S$ zugeführt. Die zugehörigen Ströme $I_R$ und $I_S$ werden durch die Stromwandler 8 und 10 erfaßt und in hier nicht dargestellten Eingängen K2 (Figur 1) der beiden Wechselspannungsintegratoren zugeführt.

Zur frequenzabhängigen Einstellung des Tastgrades a werden — wie im Zusammenhang mit Figur 1 bereits erläutert — die Steuereingänge der als Pulsbreitenmultiplizierer F1 und F2 in beiden Wechselspannungsintegratoren $IG_R$ und $IG_S$ eingesetzten FET-Schalter von einem Taktgenerator G mit einem Taktsignal mit dem Tastgrad a gespeist. Der Tastgrad a des Ausgangssignals des Taktgenerators G wird durch eine zur Frequenz der Synchronmaschine M proportionale Referenzspannung $U_{ref}$ bestimmt, die beispielsweise aus einem mit der Synchronmaschine gekoppelten Tachogenerator stammen kann. Die beiden Wechselspannungsintegratoren $IG_R$ und $IG_S$ liefern ausgangsseitig (Klemme K1 in Figur 1) die den Fluß in zwei um 120° versetzten Wicklungen darstellenden Spannungssignale und wobei

$$- \Psi_R(t) = \int (u_R - R \cdot i_R) \cdot dt - L \cdot i_R$$

und

$$- \Psi_S(t) = \int (u_S - R \cdot i_S) \cdot dt - L \cdot i_S.$$

Der Block 1 in Figur 3 liefert somit an seinen Ausgängen zwei um 120° versetzte Spannungssignale, die den mit zwei Wicklungen der Synchronmaschine verketteten Fluß repräsentieren. Diese beiden Größen werden in einem beispielsweise aus der Siemens-Zeitschrift 45 (1971), Heft 10, S. 761 bis 764 bekannten Koordinatenwandler 2 in ein kartesisches Koordinatensystem umgerechnet. Diese Größen repräsentieren nun die zwei Komponenten des umlaufenden Flußvektors in einem feststehenden 90°-Koordinatensystem. In einem nachgeschalteten Vektoranalysator 3 können diese Größen noch auf einen amplitudenunabhängigen konstanten Wert normiert werden, wobei diese Normierung nur bei Drehfeldmaschinenantrieben mit großem Feldschwächbereich notwendig ist. Ein derartiger Vektoranalysator ist beispielsweise aus der Dissertation von F. Blaschke mit dem Titel « Das Verfahren der Feldorientierung der Drehfeldmaschine », TU-Braunschweig vom 27.7.73 bekannt. In einem in dem o.g. Beitrag aus der Siemens-Zeitschrift bekannten Vektordreher 4 wird der Flußvektor um den gewünschten Steuerwinkel $\alpha$ gedreht. Dazu wird an dem anderen Eingang des Vektordrehers 4 der gewünschte Steuerwinkel in kartesischen Komponenten ($\sin\alpha$ und $\cos\alpha$) vorgegeben. Am Ausgang des Vektordrehers 4 erscheinen die kartesischen Komponenten des gedrehten Flußvektors und werden wiederum einem Koordinatenwandler 5 zugeführt, der die um den Steuerwinkel $\alpha$ gedrehten kartesischen Komponenten des Flußvektors in ein dreiphasiges 120°-System (Drehstromsystem) zurücktransformiert. Es ist darauf hinzuweisen, daß prinzipiell auch eine Signalverarbeitung im 120° Koordinatensystem ohne die beiden Koordinatenwandler 2 und 5 möglich ist, wie beispielsweise aus der DE-OS 26 31 498 bekannt ist. Die Ausgangssignale der Koordinatenwandlers 5 werden anschließend einem beispielsweise aus der Siemens -Zeitschrift (45), Heft 10, S. 765-768 bekannte Winkelschalter 6 zugeführt, der die Zündzeitpunkte für die Thyristoren des maschinenseitigen Stromrichters und damit die Lage des Ständerdurchflutungsvektors bestimmt.

Die Anordnung zur Steuerung der netzseitigen Stromrichter des Umrichters UR braucht in diesem Zusammenhang nicht erläutert zu werden. Sie ist beispielsweise aus der schweizer Zeitschrift «Neue Technik», 1974, Seite 96 bekannt. Die Lage des Ständerdurchflutungsvektors kann damit unabhängig von der Frequenz um den gewünschten Steuerwinkel $\alpha$ gegenüber der EMK bzw. um $\alpha + 90°$ gegenüber dem Fluß der Synchronmaschine vorgegeben werden. Wegen der Konstanz und der Kleinheit der Winkelfehler $\Delta\varphi$ der durch die Wechselspannungsintegratoren $IG_R$ und $IG_S$ ermittelten Komponenten des Flußvektors ist eine optimale Ausnutzung der Synchronmaschine M und des Umrichters UR, z.B. durch ständigen Betrieb an der Wechselrichtertrittgrenze, ermöglicht; bei Einsatz der aus der eingangs genannten DE-AS 26 35 965 bekannten Wechselspannungsintegratoren mit frequenzabhängigem und erheblichem Phasenfehler $\Delta\varphi$ müßte dagegen ein größerer Sicherheitsabstand zur Wechselrichtertrittgrenze eingehalten werden, so daß zur Realisierung der gleichen an der Welle der Synchronmaschine abnehmbaren Leistung eine größere Bauleistung von Maschine und Umrichter erforderlich wäre.

In Figur 4 ist als weiteres Ausführungsbeispiel eines Drehfeldmaschinenantriebes mit erfindungsgemäßen Wechselspannungsintegratoren die Stromsollwertvorgabe für den eigengetakteten, insbesondere feldorientierten Betrieb einer direktumrichtergespeisten Synchronmaschine dargestellt. Die Blöcke 1 bis 5 in Figur 4 entsprechen den Blöcken 1 bis 5 der Figur 3. Die

Ein gangssignale $i\,\varphi_1^{s^x}$ und $i\,\varphi_2^{s^x}$ das Vektordrehers 4 stellen hier die Sollwerte für die kartesischen Komponenten des Ständerdurchflutungsvektors im mit dem Fluß umlaufenden Koordinatensystem

dar, wobei $i\,\varphi_1^{s^x}$ die Komponente in Flußrichtung und $i\,\varphi_2^{s^x}$ die senkrecht daraufstehende Komponente bezeichnet. Am Ausgang des Vektordrehers 4 stehen die Sollwerte für die Komponenten

des Ständerdurchflutungsvektors $i\,\alpha^{s^x}$ und $i\,\beta^{s^x}$ im feststehenden Koordinatensystem bereit. Der Ständerdurchflutungsvektor steht also immer um

einen festen, mit den Komponenten $i\,\varphi_1^{s^x}$ und $i\,\varphi_2^{s^x}$ einstellbaren Winkel gedreht zum Flußvektor der Maschine.

Im Koordinatenwandler 5 wird in bekannter

Weise eine Umrechnung der Komponenten $i\,\alpha^{s^x}$ und $i\,\beta^{s^x}$ in das 120°-System vorgenommen, so daß an seinem Ausgang die drei Stromsollwerte $i_R{}^*$, $i_S{}^*$, $i^*$ für die Leiterströme der Maschine zur Verfügung stehen. Diese werden einer Regel- und Steuereinrichtung 11 für den Direktumrichter DU zugeführt. Diese Regel- und Steuereinrichtung ist beispielsweise aus der Siemens-Zeitschrift (51), 1977, Heft 5, S. 416-422 bekannt. Es sei noch erwähnt, daß statt dem Direktumrichter DU mit seiner Regel- und Steuereinrichtung 11 auch ein Pulsumrichter vorgesehen sein kann.

Um einen möglichst großen Stellbereich des Tastgrades oder Gewichtungsfaktors a zu ermöglichen, wird als Taktgenerator G ein Taktgenerator mit Pulsfrequenz- und Pulsbreitenverstellung eingesetzt. Dies ist in Figur 5 schematisch veranschaulicht. Bei einer der Drehzahl n und damit der Frequenz $\omega$ der Synchronmaschine M proportionalen, am Eingang des Taktgenerators G anstehenden Referenzspannung $U_{Ref}$, die kleiner als eine Übergangsspannung $U_{\ddot{u}}$ ist, wird die Frequenz verstellt (Kurve $f/f_{max}$). Dabei bleibt die Impulsbreite $T_{emin}$ konstant. Bei einer Bezugsspannung $U_{Ref}$ die oberhalb der Übergangsspannung $U_{\ddot{u}}$ liegt, bleibt die Frequenz konstant und es ändert sich die Impulsbreite (Kurve $T_e/1f_{max}$). Der Übergang von Frequenz- zur Impulsbreitenverstellung erfolgt hinsichtlich des Tastgrades stetig. Damit entsteht eine Rechteckspannung mit einem in weiten Grenzen vari-

ablen Tastgrad (Kurve $T_e/T$).

Dieser sehr große Stellbereich ermöglicht die Vorgabe sehr kleiner Tastgrade oder Gewichtungsfaktoren a einschließlich des Wertes Null. Der Nullpunktsregler ist bei Wert Null vollständig von dem Integrator abgekoppelt. Dies ist von Bedeutung für die Lageortung des Läufers der Synchronmaschine M im Stillstand vor der Inbetriebsetzung des Synchronmaschinenantriebs, da hierbei bei abgeschalteter Ständerstromversorgung lediglich die durch die beim Auferregen der Erregerwicklung in den Ständerwicklungen der Synchronmaschine M entstehende Induktionsspannung durch den Integrator aufintegriert wird. Eine voll angekoppelte Nullpunktsregelung würde in diesem Fall dazu tendieren, den Integratorinhalt auf Null zu bringen und damit eine exakte Lageortung des Läufers verfälschen. Bei der eingangs erwähnten DE-AS 26 35 965 wird dieses Problem durch vollständiges Abschalten des nullpunktsreglers gelöst, wobei allerdings die eingangs angesprochenen Probleme beim plötzlichen Zuschalten des Nullpunktsreglers nach Anlauf der Synchronmaschine M auftreten. Der erfindungsgemäße Wechselspannungsintegrator ermöglicht demgegenüber, den Nullpunktsregler vom Beginn der Lageortung des Läufers andauernd, aber mit frequenzproportionalem Durchgriff dauernd in Eingriff zu lassen, wobei durch die mit dem Tastgrad a zunehmende Ankopplung oder Erhöhung des Durchgriffs des Nullpunktsreglers eine an die Frequenz der Drehfeldmaschine M angepaßte Ankopplung des Nullpunktsreglers und damit mit der Frequenz der Drehfeldmaschine zunehmende Regelgeschwindigkeit erreichbar ist. Bei dem bei Maximaldrehzahl des Drehfeldmaschinenantriebes auftretenden Tastgrade a = 1 und damit voll angekoppeltem Nullpunktsregler werden die Gleichspannungsanteile des Ausgangssignals des Integrators V1 mit höchster Regelgeschwindigkeit ausgeregelt.

Beim Anlauf des Antriebes mit einer Synchronmaschine wird zunächst die Stromversorgung der Stromrichtersteuerung eingeschaltet. Anschließend wird für kurze Zeit der Tastgrad a = 1 eingestellt, so daß die an den Eingängen der beiden Wechselspannungsintegratoren $IG_R$ und $IG_S$ auftretenden Gleichanteile, die beispielsweise von Wandlern oder Nullpunktsfehlern vorgeschalteter Verstärker oder vom Integrator V1 selbst herrühren können, schnell ausgeregelt werden und damit die Ausgangsspannung der beiden Wechselspannungsintegratoren entsprechend dem Fluß in der Maschine auf Null gesetzt wird. Darauf folgend wird der Tastgrad a auf den der Frequenz entsprechenden Wert, z.B. a = 0 bei Stillstand der Synchronmaschine verstellt. Frühestens gleichzeitig wird die Synchronmaschine M über die Erregerwicklung erregt, so daß die Lageortung des Läufers durchführbar ist. Nach Erreichen des gewünschten Flußwertes wird schließlich die Ständerstromregelung freigegeben. Der Antrieb beschleunigt und der Tastgrad a ist nunmehr proportional der Maschinenfrequenz $\omega$.

## Ansprüche

1. Wechselspannungsintegrator zur Bildung eines elektrischen Spannungssignals ($u_a$), das einer Flußkomponente ($\Psi_R$) in einer Drehfeldmaschine proportional ist, mit einem Integrator (V1) als Eingangsglied und einem gegengekoppelten Nullpunktsregler (V2, V3, V4, F1, F2) zur Unterdrückung eines Gleichanteils der Integratorausgangsspannung ($u_a$), wobei dem Integrator (V1) als Eingangsspannung ($u_e$) eine der zur Flußkomponente ($\Psi_R$) gehörigen Sternspannung ($u_R$) proportionale Spannung sowie zur Kompensation des ohmschen Ständerspannungsabfalles eine dem zugehörigen Ständerstrom ($i_R$) in einer Maschinenzuleitung proportionale Spannung ($R_R \cdot i_R$) zugeführt sind, wobei ferner der Eingang des Nullpunktsreglers mit dem Ausgang des Integrators verbunden ist und der Ausgang des Nullpunktsreglers an einen Summenpunkt (S1) am Eingang des Integrators angeschlossen ist, und wobei ferner zur Kompensation der induktiven Streuspannung $\dfrac{di}{(L \cdot dtR)}$ eine aus dem vom Ständerstrom ($i_R$) abgeleitete Spannung verarbeitet wird, dadurch gekennzeichnet, daß der Nullpunktsregler einen P-Regler (V3) und einen I-Regler (V4) aufweist, daß das Ausgangssignal des P-Reglers (V3) und das Ausgangssignal des I-Reglers (V4) dem Summenpunkt (S1) am Integratoreingang zugeführt ist und daß das Ausgangssignal des Integrators (V1) proportional zur Frequenz ($\omega$) der Drehfeldmaschine (M) gewichtet (a; F1) dem Eingang des P-Reglers (V3) und proportional zum Quadrat der Frequenz ($\omega$) gewichtet ($a^2$; F1, F2) dem Eingang des I-Reglers (V4) zugeführt ist, wobei der Gewichtungsfaktor (a) einen Maximalwert 1 aufweist (Fig. 1).

2. Wechselspannungsintegrator nach Patentanspruch 1, dadurch gekennzeichnet, daß dem P-Regler (V3) ein erstes Multiplizierglied (F1) vorgeschaltet ist und daß das Ausgangssignal des ersten Multipliziergliedes einem zweiten Multiplizierglied (F2) zugeführt ist, das dem Eingang des I-Reglers (V4) vorgeschaltet ist (Fig. 1).

3. Wechselspannungsintegrator nach Patentanspruch 2, dadurch gekennzeichnet, daß als Multiplizierglieder Pulsbreitenmultiplizierglieder (F1, F2) eingesetzt sind und daß dem ersten Pulsbreitenmultiplizierglied (F1) ein Glättungsglied nachgeschaltet ist (Fig. 1).

4. Wechselspannungsintegrator nach Patentanspruch 3, dadurch gekennzeichnet, daß als Glättungsglied ein Kondensator ($C_g$) dient, der dem Rückführungswiderstand (R) eines dem ersten Pulsbreitenmultiplizierglied (F1) nachgeschalteten Umkehrverstärkers (V2) parallel geschaltet ist, wobei das Ausgangssignal des Umkehrverstärkers (V2) am Eingang des P-Reglers (V3) und des zweiten Multipliziergliedes (F2) ansteht (Fig. 1).

5. Wechselspannungsintegrator nach Patentanspruch 4, dadurch gekennzeichnet, daß die Kapazität des Kondensators ($C_g$) sehr klein im Verhältnis zu dem die Zeitkonstante des I-Reglers (V4) bestimmenden Kondensator (C3) ist.

6. Wechselspannungsintegrator nach einem der Patentansprüche 3 bis 5, dadurch gekennzeichnet, daß als Pulsbreitenmultipliergglieder (F1, F2) FET-Schalter eingesetzt sind, an deren Steuereingang das Ausgangssignal eines Taktgenerators (G) ansteht, dessen Tastgrad (a) proportional zur Frequenz ($\omega$) der Drehfeldmaschine (M) ist.

7. Schaltungsanordnung nach Patentanspruch 6, dadurch gekennzeichnet, daß der Taktgenerator (G) unterhalb einer Übergangsfrequenz ($\omega_{\ddot{u}} \sim U_{\ddot{u}}$) des umlaufenden Flußvektors der Drehfeldmaschine (M) pulsfrequenzverstellbar und oberhalb der Übergangsfrequenz pulsbreitenverstellbar ist.

8. Schaltungsanordnung nach einem der Patentansprüche 1 bis 7, dadurch gekennzeichnet, daß am Ausgang des Integrators (V1) ein weiterer Summenpunkt (S2) vorgesehen ist, dem zur Kompensation der induktiven Streuspannung ein dem Integral der induktiven Streuspannung proportionales Signal ($i_R \cdot L$) zugeführt ist.

9. Verwendung zweier baugleicher Wechselspannungsintegratoren ($IG_R$, $IG_S$) bei einem Drehfeldmaschinenantrieb mit einer umrichtergespeisten Drehfeldmaschine (M) und einer Umrichtersteuerung für den eigengetakteten, insbesondere feldorientierten Betrieb dieser Maschine, wobei zur Bildung von zwei elektrischen Spannungssignalen ($\Phi \cdot \sin\varphi_s$, $\Phi \cos(\varphi_s + 120°)$), die jeweils einer unterschiedlichen Flußkomponente in der Drehfeldmaschine proportional sind, jedem Wechselspannungsintegrator-Eingang jeweils Spannungen zugeführt sind, die proportional sind zu der der entsprechenden Flußkomponente entsprechenden Sternspannung und dem zugehörigen Ständerstrom.

10. Verfahren zum Betrieb eines Drehfeldmaschinenantriebes nach Patentanspruch 9, dadurch gekennzeichnet, daß beim Anlauf einer Synchronmaschine folgende Schritte in zeitlicher Aufeinanderfolge vorgenommen werden :

a) zuerst wird die Stromversorgung der Stromrichtersteuerung eingeschaltet,

b) anschließend wird der Gewichtungsfaktor (a) kurzzeitig auf den Wert 1 gesetzt,

c) dann wird der Gewichtungsfaktor (a) auf den der momentanen Frequenz ($\omega$) der Synchronmaschine (M) entsprechenden Wert gesetzt,

d) frühestens gleichzeitig wird die Synchronmaschine (M) über die Erregerwicklung aufererregt,

e) nach Erreichen des gewünschten Flußwertes wird die Ständerstromregelung freigegeben.

**Claims**

1. An alternating voltage integrator for the formation of an electrical voltage signal ($u_a$) which is proportional to a flux component ($\Psi_R$) of a rotating field machine, with an integrator (V1) as input element and a zero point regulator (V2, V3, V4, F1, F2), with negative feedback, for the suppression of a d.c. component of the integrator output voltage ($u_a$), where the integrator (V1) is supplied, as input voltage ($u_e$), with a voltage which is proportional to the star voltage ($u_R$) corresponding to the flux component ($\Psi_R$), and, for the compensation of the resistive stator voltage drop, with a voltage ($R_R \cdot i_R$) which is proportional to the associated stator current ($i_R$) in a supply line to the machine, where furthermore the input of the zero point regulator is connected to the output of the integrator, and the output of the zero point regulator is connected to a sum point (S1) at the input of the integrator, and where furthermore, in order to compensate the leakage inductance voltage $\dfrac{di}{(L \cdot dtR)}$ a voltage derived from the stator current ($i_R$) is processed, characterised in that the zero point regulator comprises a proportional controller (V3) and an integral controller (V4), that the output signal of the proportional controller (V3) and the output signal of the integral controller (V4) are fed to the sum point (S1) at the integrator input, and that the output signal of the integrator (V1) is fed to the input of the proportional controller (V3) weighted (a ; F1) in proportion to the frequency ($\omega$) of the rotating field machine (M), and is fed to the input of the integral controller (V4) weighted ($a^2$ ; F1, F2) in proportion to the square of the frequency ($\omega$), where the weighting factor (a) has a maximum value of 1 (Fig. 1).

2. An alternating voltage integrator according to Patent Claim 1, characterised in that the proportional controller (V3) is preceded by a first multiplier (F1), and that the output signal of the first multiplier is fed to a second multiplier (F2) which precedes the input of the integral controller (V4) (Fig. 1).

3. An alternating voltage integrator according to Patent Claim 2, characterised in that pulse width multipliers (F1, F2) are used as multipliers and that the first pulse width multiplier (F1) is followed by a smoothing element (Fig. 1).

4. An alternating voltage integrator according to Patent Claim 3, characterised in that the smoothing element consists of a capacitor ($C_g$) which is connected in parallel with the feedback resistor (R) of an inverting amplifier (V2) connected following the first pulse width multiplier (F1), where the output signal of the inverting amplifier (V2) is present at the input of the proportional controller (V3) and the second multiplier (F2) (Fig. 1).

5. An alternating voltage integrator according to Patent Claim 4, characterised in that the capacitance of the capacitor ($C_g$) is very small in relationship to the capacitor (C3) which determines the time constant of the integral controller (V4).

6. An alternating voltage integrator according to one of Patent Claims 3 to 5, characterised in that the pulse width multipliers (F1, F2) consist of FET switches to whose control inputs is applied the output signal of a pulse generator (G) whose pulse duty ratio (a) is proportional to the frequency ($\omega$) of the rotary field machine (M).

7. A circuit arrangement according to Patent Claim 6, characterised in that the pulse generator (G) is pulse-frequency adjustable below a transition frequency ($\omega_{\ddot{u}} \sim U_{\ddot{u}}$) of the rotating flux vector of the rotating field machine (M) and is pulse-width adjustable above the transition frequency.

8. A circuit arrangement according to one of Patent Claims 1 to 7, characterised in that at the output of the integrator (V1) there is arranged a further sum point (F2) which, for the compensation of the leakage inductance voltage, is supplied with a signal ($i_R \cdot L$) proportional to the integral of the leakage inductance voltage.

9. Use of two structurally identical attenuating voltage integrators ($IG_R$, $IG_S$) in a rotating field machine drive comprising an inverter-fed rotating field machine (M) and an inverter control unit for the self-pulsed, especially field-orientated, operation of this machine, where, in order to form two electrical voltage signals ($\Phi \cdot \sin\varphi_s$, $\Phi \cos(\varphi_s + 120°)$) each of which is proportional to a different flux component in the rotating field machine, each alternating voltage integrator input is supplied with voltages which are proportional to the star voltage corresponding to the corresponding flux component and to the associated stator current.

10. A method for the operation of a rotating field machine drive according to Patent Claim 9, characterised in that upon starting of a synchronous machine, the following steps are carried out in sequence :

a) firstly the current supply of the current converter control is switched on,

b) then the weighting factor (a) is temporarily set at the value 1,

c) then the weighting factor (a) is set at the value corresponding to the instantaneous frequency ($\omega$) of the synchronous machine (M),

d) at the earliest simultaneously the synchronous machine (M) is excited via the exciting winding and

e) when the desired flux value has been reached the stator current regulation unit is released.


**Revendications**


1. Intégrateur pour tension alternative en vue de former un signal de tension électrique ($u_a$) qui est proportionnel à une composante de flux ($\Psi_R$) dans une machine à champ tournant, comprenant un intégrateur (VI) constituant l'élément d'entrée et un régulateur de remise à zéro (V2, V3, V4, F1, F2) monté en contre-réaction, en vue de supprimer une composante continue de la tension ($u_a$) de sortie de l'intégrateur, du type dans lequel on applique à l'intégrateur (VI) comme tension d'entrée ($u_e$) une tension qui est proportionnelle à une tension en étoile ($u_R$) appartenant à la composante du flux ainsi que pour la compensation de la chute de tension ohmique du stator, une tension ($R_R \cdot i_R$) proportionnelle au courant statorique ($i_R$) dans un conducteur d'alimentation de la machine, dans lequel l'entrée du régulateur de remise à zéro est reliée à la sortie de l'intégrateur alors que la sortie du régulateur de remise à zéro est reliée à un point de sommation (S1) situé au niveau de l'entrée de l'intégrateur, et dans lequel on élabore, pour compenser la tension de dispersion inductive $\dfrac{di}{(L \cdot dtR)}$, une tension dérivée du courant statorique ($i_R$), caractérisé par le fait que le régulateur de remise à zéro comporte un régulateur proportionnel (V3) et un régulateur intégral (V4), que le signal de sortie du régulateur proportionnel (V3) et le signal de sortie du régulateur intégral (V4) sont appliqués au point de sommation (S1) au niveau de l'entrée de l'intégrateur et que le signal de sortie de l'intégrateur (V1) pondéré (a ; F1) proportionnellement à la fréquence ($\omega$) de la machine à champ tournant (M), est appliqué à l'entrée du régulateur proportionnel (V3) alors que, pondéré ($a^2$ ; F1, F2) proportionnellement au carré de la fréquence ($\omega$), il est appliqué à l'entrée du régulateur intégral (V4), le facteur de pondération (a) présentant une valeur maximale de 1.

2. Intégrateur pour une tension alternative selon la revendication 1, caractérisé par le fait qu'en amont du régulateur proportionnel (V3) est monté un premier dispositif multiplicateur (F1) et que le signal de sortie de ce premier dispositif multiplicateur est appliqué à un second dispositif multiplicateur (F2) monté en amont de l'entrée du régulateur intégral (V4).

3. Intégrateur pour une tension alternative selon la revendication 2, caractérisé par le fait que les dispositifs multiplicateurs sont constitués par des dispositifs multiplicateurs de la durée des impulsions (F1, F2) et qu'en aval du premier dispositif multiplicateur (F1) est prévu un dispositif de lissage (figure 1).

4. Intégrateur pour une tension alternative selon la revendication 3, caractérisé par le fait que le dispositif de lissage est un condensateur ($C_g$) monté en parallèle sur la résistance de réaction d'un amplificateur inverseur (V2) monté en aval du premier dispositif multiplicateur de la durée des impulsions, le signal de sortie dudit amplificateur inverseur (V2) se présentant à l'entrée du régulateur proportionnel (V3) et du second dispositif multiplicateur (F2).

5. Intégrateur pour une tension alternative selon la revendication 4, caractérisé par le fait que la capacité du condensateur ($C_g$) est très faible par rapport à celle du condensateur (C3) qui détermine la constante de temps du régulateur intégral (V4).

6. Intégrateur pour une tension alternative selon l'une des revendications 3 à 5, caractérisé par le fait que les dispositifs multiplicateurs de la durée des impulsions (F1, F2) sont constitués par des commutateurs à transistors à effet de champ dont les électrodes de commande reçoivent le signal de sortie d'un générateur de cadence (G) dont le taux des impulsions (a) est proportionnel à la fréquence ($\omega$) de la machine à champ tournant.

7. Intégrateur pour une tension alternative selon la revendication 6, caractérisé par le fait que le générateur de cadence (G) est, en-dessous d'une fréquence de passage ($\omega_{ü} \sim U_{ü}$) du vecteur de flux tournant de la machine à champ tournant, susceptible d'être réglé en fréquences des impulsions, alors qu'il est susceptible d'être réglé en durée des impulsions au-dessus de cette fréquence de passage.

8. Intégrateur pour une tension alternative selon la revendication 1, caractérisé par le fait qu'à la sortie de l'intégrateur (VI) est prévu un second point de sommation (S2) auquel est appliqué un signal ($i_R \cdot L$) proportionnel à l'intégrale de la tension de dispersion inductive, en vue de compenser cetter dernière tension.

9. Mise en œuvre de deux intégrateurs pour tension alternative identiques entre eux ($IG_R$, $IG_S$) pour le dispositif d'entraînement d'une machine à champ tournant, comportant une machine à champ tournant (M) alimentée par convertisseur de fréquence ainsi qu'une commande de convertisseur de fréquences, pour le fonctionnement à cadence propre, en particulier à orientation du champ, dans laquelle, en vue de former deux signaux de tension électriques ($\Phi.\sin\varphi_s$, $\Phi\cos(\varphi_s + 120\,°)$) qui sont respectivement proportionnels à une composante différente du flux de la machine à champ tournant, on applique respectivement à chaque intégrateur de tension alternative des tensions qui sont proportionnelles à la tension en étoile qui correspond à la composante correspondante du flux et au courant statorique associé.

10. Procédé pour le fonctionnement du dispositif d'entraînement d'une machine à champ tournant selon la revendication 9, caractérisé par le fait qu'au démarrage d'une machine synchrone on met en œuvre, successivement dans le temps, les phases opératoires suivantes :

a) on met d'abord en service l'alimentation en courant de la commande du convertisseur de fréquences,

b) ensuite on règle à la valeur 1, et pour une courte durée, le facteur de pondération (a),

c) puis on règle le facteur de pondération (a) à la valeur qui correspond à la fréquence momentanée ($\omega$) de la machine synchrone,

d) on excite, au plus tôt, simultanément la machine synchrone (M) par l'intermédiaire de l'enroulement d'excitation,

e) après que soit atteinte la valeur souhaitée du flux, on libère le réglage du courant statorique.

FIG 1

FIG 3

FIG 2

FIG 4

FIG 5